# EUROPEAN PATENT APPLICATION

(11) **EP 3 192 351 A1**
(43) Date of publication of application: **19.07.2017**
(21) Application number: 16151579.6
(22) Date of filing: 15.01.2016
(51) Int. Cl.: A01G 1/00, A01G 9/10

(54) **METHOD FOR PROPAGATING PHYLLOCACTI AND POTTED PLANT**

(71) Applicant: Gartneriet PKM A/S, 5270 Odense N (DK)
(72) Inventor: Madsen, Kristian, 5270 Odense N (DK); Hald Madsen, Christian, 4220 Korsør (DK)
(74) Representative: Budde Schou A/S

(57) **Abstract**

The method includes the steps of providing cuttings (2) formed by a single phylloclade, and planting cuttings directly in a sales pot (3) without intermediate replanting whereby a number of cuttings are substantially evenly distributed over the growing substrate (4) of the sales pot. Said number of cuttings is greater than 0.7 times the square root of a top area of the sales pot when said top area is measured in square centimetres. The forming of flower buds (5) is initiated when the cuttings have formed a branch having a height corresponding to a predetermined number of new phylloclades (7) on top of each other and on the respective cutting. Said predetermined number of new phylloclades is one when said number of cuttings is less than six, not more than two when said number is less than seven, and not more than three when said number is less than nine.

## Description

The present invention relates to a method for propagating Phyllocacti including the steps of providing cuttings from a branch of a mother plant, whereby each cutting is formed by a single phylloclade, providing a sales pot with a growing substrate, the sales pot having a top area, and planting cuttings in the sales pot.

Phyllocacti are epiphytic plants, which primarily originate from Central and South America but also for instance from Africa and Madagascar. Of Phyllocacti in production can be mentioned Schlumbergera and Rhipsalidopsis. Schlumbergera and Rhipsalidopsis are native to a small region in the Organ Mountains north of Rio de Janeiro, Brazil in South America. Under natural conditions Schlumbergera truncata will flower in mid to late November and Schlumbergera bridgesii in December thus the common names given are Thanksgiving and Christmas Cacti, respectively.

The Phyllocacti grow vegetatively by producing flat, leaf-like segments, so-called phylloclades connected at the mid-veins. The phylloclades thus form series of connected phylloclades, in the following referred to as branches of phylloclades.

EP 0 981 950 B1 discloses a method for propagating Phyllocacti by using cuttings from a mother plant, whereby cuttings are planted in a sales pot with growing substrate in sets of at least two cuttings, and whereby the cuttings of a set are spaced apart over the surface area of said growing substrate in the sales pot. In order to allow a first stage of growing and thereby facilitate growth, the cuttings may intermediately be planted in multi-compartment trays, in which case each cutting must be planted separately in a compartment so that the cuttings do not stick together when they have to be replanted into the sales pots. By proceeding in this manner, the cuttings are allowed to have better space for optimum development as compared to earlier methods, whereby the cuttings of a set were planted very tightly together in the container. According to the disclosed method, the sets comprise two to four cuttings, but preferably the sets comprise three cuttings. Furthermore, according to this method, to be saleable, the plant must in general have a height of three or four leaves (phylloclades). However, it has been realised that it may be a drawback of this prior art method that relatively more space is occupied during a relatively longer part of the growing period, whether the cuttings are planted directly in the sales pots or intermediately planted in multi-compartment trays.

The object of the present invention is to provide a more efficient method for propagating Phyllocacti.

In view of this object, said cuttings are planted directly in the sales pot without intermediate replanting so that a number of cuttings are at least substantially evenly distributed over the growing substrate of the sales pot, said number of cuttings being greater than 0.7 times the square root of the top area of the sales pot when said top area is measured in square centimetres, and the forming of flower buds is initiated when at least substantially all of the cuttings have formed a respective branch having a height corresponding to a predetermined number of new phylloclades extending in direct line on top of each other and placed on top of the respective cutting, said predetermined number of new phylloclades being one when said number of cuttings is less than six, not more than two when said number of cuttings is less than seven, and not more than three when said number of cuttings (2) is less than nine.

In this way, by directly planting a substantially larger number of evenly distributed cuttings in a sales pot relative to prior art solutions and at the same time initiating the formation of flower buds at an earlier stage in relation to prior art solutions, a dense plant with plenty of flower buds may be achieved in substantially shorter time in a particular space-efficient manner.

In practice, according to the present invention, the number of cuttings planted in a sales pot of a certain size is at least approximately doubled, and the number of new phylloclades extending in direct line on top of each other is generally reduced by one as compared to prior art products. Moreover, the cuttings are planted directly in a sales pot. Because the growth time of one new phylloclade is approximately 7 weeks and because a replanting of cuttings extends the growth time by approximately 3 to 5 weeks, according to the method as defined by the present invention, the production time may be reduced by approximately 10 to 12 weeks.

In an embodiment, said number of cuttings is greater than 0.75, preferably 0.8, more preferred 0.9, and even more preferred 1.0, times the square root of the top area of the sales pot when said top area is measured in square centimetres.

In an embodiment, said predetermined number of new phylloclades is not more than two when said number of cuttings is less than eight, and not more than three when said number of cuttings is less than 10.

In an embodiment, said predetermined number of new phylloclades is not more than two when said number of cuttings is less than ten, and not more than three when said number of cuttings is less than 12.

In an embodiment, said predetermined number of new phylloclades is generally not more than four or generally not more than five.

In an embodiment, the sales pot is a standard conical or cylindrical pot having a nominal top diameter approximately from 5 to 7 centimetres, whereby said number of cuttings is at least five, and whereby said predetermined number of new phylloclades is one.

In an embodiment, the sales pot is a standard conical or cylindrical pot having a nominal top diameter approximately from 7 to 9 centimetres, whereby said number of cuttings is at least eight, and whereby said predetermined number of new phylloclades is two.

In an embodiment, the sales pot is a standard conical or cylindrical pot having a nominal top diameter approximately from 9 to 11 centimetres, whereby said number of cuttings is at least nine, and whereby said predetermined number of new phylloclades is not more than two.

In an embodiment, the sales pot is a standard conical or cylindrical pot having a nominal top diameter approximately from 11 to 13 centimetres, whereby said number of cuttings is at least ten, and whereby said predetermined number of new phylloclades is not more than three.

In an embodiment, the sales pot is a standard conical or cylindrical pot having a nominal top diameter approximately from 13 to 16 centimetres, whereby said number of cuttings is at least 12, and whereby said predetermined number of new phylloclades is not more than four.

In an embodiment of the method or the potted plant according to the invention, the top area of the sales pot is generally not more than 200 square centimetres.

In an embodiment, the Phyllocactus is Schlumbergera and the Phyllocacti planted in the sales pots are subjected to simulated sequential periods of day and night by turning light on and off or at least reducing light substantially, and whereby the forming of flower buds is initiated by reducing the duration of the day periods substantially, such as from approximately between 14 to 15 hours to less than approximately 9 hours.

In an embodiment, the Phyllocactus is Rhipsalidopsis and whereby the forming of flower buds is initiated by reducing substantially the temperature of the Phyllocacti planted in the sales pots from a temperature of approximately 15 to 25 degrees Celsius to a temperature of approximately 8 to 10 degrees Celsius during a period of approximately 7 to 8 weeks.

In an embodiment, cuttings are planted in a number of sales pots with said number of cuttings in dependence of the top area of the sales pot and said predetermined number of new phylloclades in dependence of said number of cuttings, and the top area of some of said sales pots is different from the top area of other of said sales pots.

The present invention further relates to a potted plant in the form of Phyllocacti planted in a sales pot with a growing substrate, the sales pot having a top area, the Phyllocacti having been propagated by providing cuttings from a branch of a mother plant, each cutting being formed by a single phylloclade, and planting the cuttings in the sales pot.

The present invention is characterised in that the cuttings have been planted directly in the sales pot without intermediate replanting so that a number of cuttings are at least substantially evenly distributed over the growing substrate of the sales pot, said number of cuttings being greater than 0.7 times the square root of the top area of the sales pot when said top area is measured in square centimetres, and in that at least substantially all of the cuttings form a respective branch having a height corresponding to a predetermined number of new phylloclades extending in direct line on top of each other and placed on top of the respective cutting, said predetermined number of new phylloclades being one when said number of cuttings is less than five, not more than two when said number of cuttings is less than seven, and generally not more than three.

In an embodiment, said number of cuttings is greater than 0.75, preferably 0.8, more preferred 0.9, and even more preferred 1.0, times the square root of the top area of the sales pot when said top area is measured in square centimetres.

In an embodiment, said predetermined number of new phylloclades is not more than two when said number of cuttings is less than ten.

In an embodiment, the sales pot is a standard conical or cylindrical pot having a nominal top diameter of approximately from 5 to 7 centimetres, said number of cuttings is at least five, and said predetermined number of new phylloclades is one.

In an embodiment, the sales pot is a standard conical or cylindrical pot having a nominal top diameter of approximately from 7 to 9 centimetres, said number of cuttings is at least eight, and said predetermined number of new phylloclades is two.

In an embodiment, the sales pot is a standard conical or cylindrical pot having a nominal top diameter of approximately from 9 to 11 centimetres, said number of cuttings is at least nine, and said predetermined number of new phylloclades is not more than two.

In an embodiment, the sales pot is a standard conical or cylindrical pot having a nominal top diameter of approximately from 11 to 13 centimetres, said number of cuttings is at least ten, and said predetermined number of new phylloclades is not more than three.

In an embodiment, the sales pot is a standard conical or cylindrical pot having a nominal top diameter approximately from 13 to 16 centimetres, whereby said number of cuttings is at least 12, and whereby said predetermined number of new phylloclades is not more than four.

The invention will now be explained in more detail below by means of examples of embodiments with reference to the very schematic drawing, in which
Figs. 1 and 2 are perspective views of prior art potted Phyllocacti;
Fig. 3 is a perspective view of potted Phyllocacti according to the present invention; and
Fig. 4 is a more schematic illustration of one branch of a Phyllocactus.

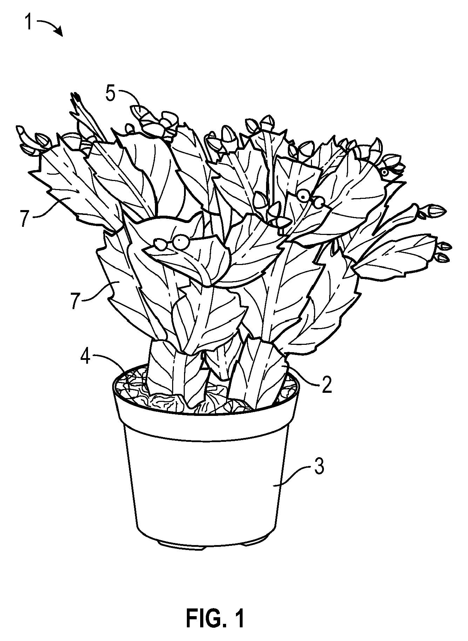

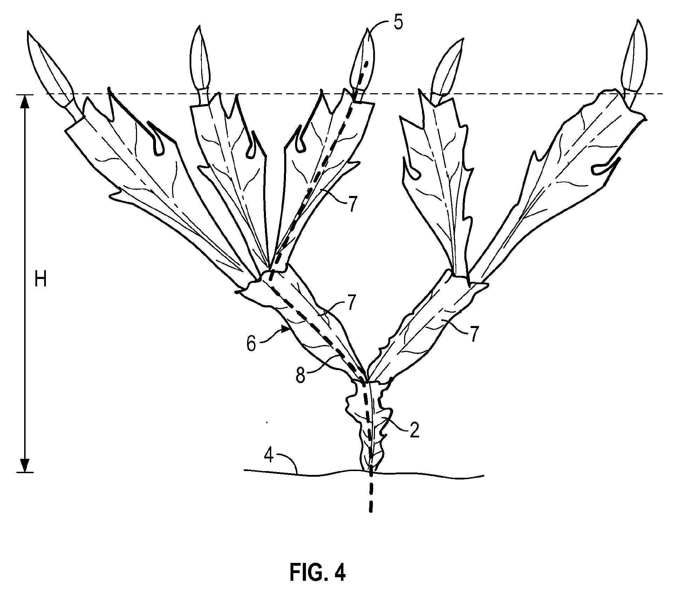

Fig. 1 illustrates a potted plant in the form of Phyllocacti potted according to a prior art method, whereby three cuttings 2 in the form of a single phylloclades (leaves) from a branch of a mother plant have been planted directly without intermediate replanting in a small sales pot 3 with a growing substrate 4. The cuttings 2 have been planted closely together in the centre of the sales pot 3. The sales pot 3 has a nominal diameter of approximately 5 to 6.5 centimetres. It is seen that each cutting 2 has formed a respective branch 6 having a height corresponding to two new phylloclades 7 extending in direct line 8 on top of each other and placed on top of the respective cutting 2. Please also refer to Fig. 4 illustrating a single branch of a Phyllocactus.

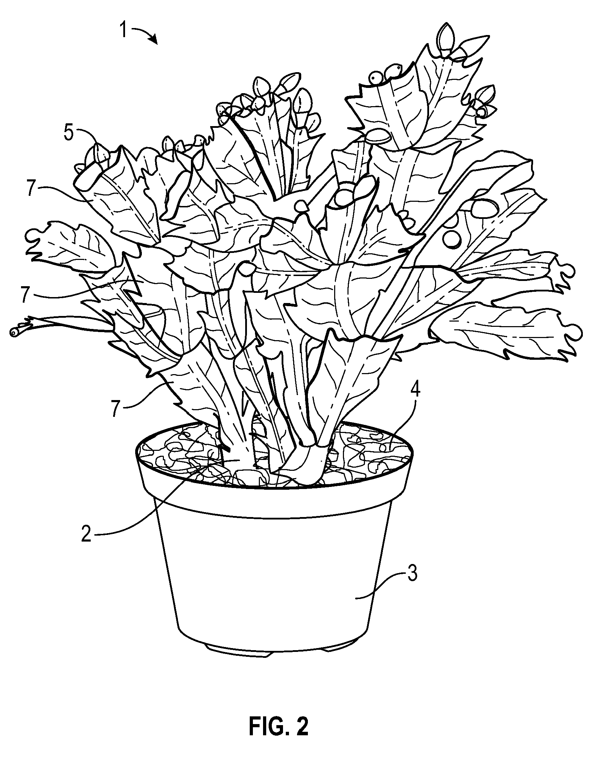

Fig. 2 illustrates a potted plant in the form of Phyllocacti potted according to a prior art method, whereby three cuttings 2 in the form of a single phylloclades from a branch of a mother plant have been planted in a medium to large sales pot 3 with a growing substrate 4. The cuttings 2 have been planted closely together in the centre of the sales pot 3. In this case, before planting the cuttings 2 in the sales pot 3, the three cuttings 2 have intermediately been planted closely together in one compartment of a multi-compartment tray in order to have better space for optimum development. Subsequently, at a later stage, they have been replanted into the sales pot 3. The sales pot 3 has a nominal diameter of approximately 9 to 10 centimetres. It is seen that each cutting 2 has formed a respective branch 6 having a height corresponding to three new phylloclades 7 extending in direct line 8 on top of each other and placed on top of the respective cutting 2. Please also refer to Fig. 4 illustrating a single branch of a Phyllocactus. Total production time for this plant amounts to approximately 33 to 34 weeks for Schlumbergera, and total production time for this plant amounts to approximately 41 to 42 weeks for Rhipsalidopsis. These numbers are valid for Denmark, whereby Schlumbergera is typically sold from 1 September to Christmas and Rhipsalidopsis is typically sold from 1 January to Easter.

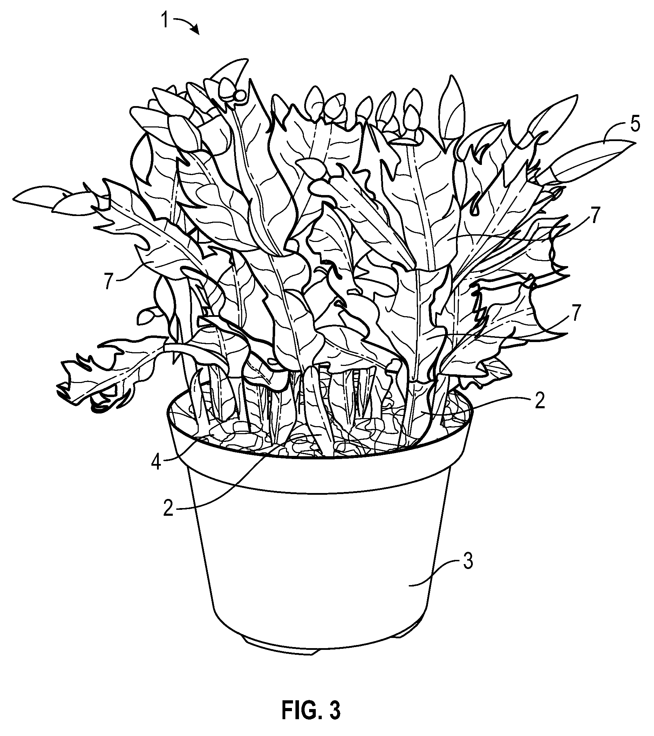

Fig. 3 illustrates a potted plant according to the present invention in the form of Phyllocacti 1 planted in a sales pot 3 with a growing substrate 4. The illustrated sales pot 3 has a nominal diameter of approximately 9.5 centimetres corresponding to a top area of 70.9 square centimetres (cm²). The Phyllocacti 1 have been propagated by providing cuttings 2 from a branch of a not shown mother plant, whereby each cutting 2 is formed by a single phylloclade. The cuttings 2 have been planted directly in the sales pot 3 without intermediate replanting so that a number of cuttings 2 are at least substantially evenly distributed over the growing substrate 4 of the sales pot 3. In the illustrated example, said number of cuttings 2 is approximately 10. According to the present invention, said number of cuttings 2 is greater than 0.7 times the square root of the top area of the sales pot 3 when said top area is measured in square centimetres. In the present example, it may be calculated that 0.7 times the square root of the top area is 5.9 resulting in a minimum number of cuttings of 6. It is furthermore seen that at least substantially all of the cuttings 2 form a respective branch 6 having a height corresponding to a predetermined number of new phylloclades 7 extending in direct line 8 on top of each other and placed on top of the respective cutting 2. In the illustrated example, said predetermined number of new phylloclades 7 is two. Please also refer to Fig. 4 illustrating a single branch of a Phyllocactus. According to the present invention, said predetermined number of new phylloclades 7 is one when said number of cuttings 2 is less than five, not more than two when said number of cuttings 2 is less than seven, and not more than three when said number of cuttings 2 is less than nine. In the present example, because said number of cuttings is 10, it is according to the invention defined that said predetermined number of new phylloclades 7 is not more than three. Total production time for this plant amounts to approximately 22 to 23 weeks for Schlumbergera, and total production time for this plant amounts to approximately 31 to 32 weeks for Rhipsalidopsis. These numbers are valid for Denmark, whereby Schlumbergera is typically sold from 1 September to Christmas and Rhipsalidopsis is typically sold from 1 January to Easter.

It is seen that whereas the prior art plant illustrated in Fig. 1 is a relatively small plant, the plants illustrated in Fig. 2 (prior art) and Fig. 3 (according to the present invention) are larger plants and are comparable in size, but the plant according to the invention seems larger and more dense than the prior art plant illustrated in Fig. 2. Nevertheless, the production time in Denmark for the plant according to the invention has been reduced by approximately 11 weeks for Schlumbergera and by approximately 10 weeks for Rhipsalidopsis when compared to the production time for the prior art plant illustrated in Fig. 2.

It is noted that according to the invention, the sales pot 3 may have any suitable form and dimensions. Apart from the sales pot 3 being conical or cylindrical, it may for instance be square, rectangular etc. A standard sales pot 3 is typically conical in order to facilitate taking a plant out of the pot. Therefore, the top area is typically greater than the bottom area. Typically, such conical sales pots are given a nominal diameter corresponding approximately to their top diameter. Standard sales pots 3 are available in a number of combinations of diameter and height, depending on the intended use. The growing substrate 4 may be any suitable kind of growing substrate, such as sphagnum, soil, mineral wool, etc. The top surface of the growing substrate 4 typically extends just a little below the top edge of the sales pot 3. Therefore, the area of the top surface of the growing substrate 4 may for all practical purposes in this context be assumed to be substantially equal to the top area of the sales pot 3. The top area of conical or cylindrical sales pots 3 has been calculated as π · r², wherein r is the radius of the top of the pot, set to the half of the nominal diameter.

The method for propagating Phyllocacti 1 according to the invention includes the steps of providing cuttings 2 from a branch of a mother plant, whereby each cutting is formed by a single phylloclade, and providing a sales pot 3 with a growing substrate 4. The cuttings are planted directly in the sales pot 3 without intermediate replanting so that a number of cuttings 2 are at least substantially evenly distributed over the growing substrate 4 of the sales pot 3. According to the invention, said number of cuttings is greater than 0.7 times the square root of the top area of the sales pot 3 when said top area is measured in square centimetres. The forming of flower buds 5 is initiated when at least substantially all of the cuttings 2 have formed a respective branch 6 having a height corresponding to a predetermined number of new phylloclades 7 extending in direct line 8 on top of each other and placed on top of the respective cutting 2. Said predetermined number of new phylloclades 7 is one when said number of cuttings 2 is less than six, not more than two when said number of cuttings 2 is less than seven, and not more than three when said number of cuttings 2 is less than nine.

In an embodiment of the method or the potted plant according to the invention, said number of cuttings 2 is greater than 0.75, preferably 0.8, more preferred 0.9, and even more preferred 1.0, times the square root of the top area of the sales pot 3 when said top area is measured in square centimetres. In the example illustrated in Fig. 3, the sales pot 3 has as mentioned a nominal diameter of approximately 9.5 centimetres corresponding to a top area of 70.9 square centimetres (cm²). It may be calculated that 1.0 times the square root of the top area is 8.4 resulting in a minimum number of cuttings of 9. As mentioned above, in the example illustrated in Fig. 3, said number of cuttings is 10. Therefore, that is an example of one of the more preferred embodiments.

In an embodiment of the method or the potted plant according to the invention, said predetermined number of new phylloclades 7 is not more than two when said number of cuttings 2 is less than eight, and not more than three when said number of cuttings 2 is less than 10.

In an embodiment of the method or the potted plant according to the invention, said predetermined number of new phylloclades 7 is not more than two when said number of cuttings 2 is less than ten, and not more than three when said number of cuttings 2 is less than 12.

In an embodiment of the method or the potted plant according to the invention, said predetermined number of new phylloclades 7 is generally not more than four or generally not more than five.

In an embodiment of the method or the potted plant according to the invention, the sales pot 3 is a standard conical or cylindrical pot having a nominal top diameter approximately from 5 to 7 centimetres, said number of cuttings 2 is at least five, and said predetermined number of new phylloclades 7 is one.

In an embodiment of the method or the potted plant according to the invention, the sales pot 3 is a standard conical or cylindrical pot having a nominal top diameter approximately from 7 to 9 centimetres, said number of cuttings 2 is at least eight, and said predetermined number of new phylloclades 7 is two.

In an embodiment of the method or the potted plant according to the invention, the sales pot 3 is a standard conical or cylindrical pot having a nominal top diameter approximately from 9 to 11 centimetres, said number of cuttings 2 is at least nine, and said predetermined number of new phylloclades 7 is not more than two.

In an embodiment of the method or the potted plant according to the invention, the sales pot 3 is a standard conical or cylindrical pot having a nominal top diameter approximately from 11 to 13 centimetres, said number of cuttings 2 is at least ten, and said predetermined number of new phylloclades 7 is not more than three.

In an embodiment of the method or the potted plant according to the invention, the sales pot 3 is a standard conical or cylindrical pot having a nominal top diameter approximately from 13 to 16 centimetres, whereby said number of cuttings 2 is at least 12, and whereby said predetermined number of new phylloclades 7 is not more than four.

In an embodiment of the method or the potted plant according to the invention, the top area of the sales pot 3 is generally not more than 200 square centimetres.

In an embodiment of the method according to the invention, the Phyllocactus 1 is Schlumbergera and the Phyllocacti planted in the sales pots 3 are subjected to simulated sequential periods of day and night by turning light on and off or at least reducing light substantially, and the forming of flower buds 5 is initiated by reducing the duration of the day periods substantially, such as from approximately between 14 to 15 hours to less than approximately 9 hours.

In an embodiment of the method according to the invention, the Phyllocactus 1 is Rhipsalidopsis and the forming of flower buds 5 is initiated by reducing substantially the temperature of the Phyllocacti 1 planted in the sales pots 3 from a temperature of approximately 15 to 25 degrees Celsius to a temperature of approximately 8 to 10 degrees Celsius during a period of approximately 7 to 8 weeks.

In an embodiment of the method according to the invention, cuttings are planted in a number of sales pots 3 with said number of cuttings in dependence of the top area of the sales pot 3 and said predetermined number of new phylloclades 7 in dependence of said number of cuttings, and the top area of some of said sales pots 3 is different from the top area of other of said sales pots 3.

### EXAMPLES

**Table 1**

| | | | **Prior art method** | | **Examples according to present invention** | | **Present invention (definition)** | |
|---|---|---|---|---|---|---|---|---|
| **Pot size** | Nominal pot diameter (cm) | Pot top area (cm²) | Number of cuttings | Number of new phylloclades | Number of cuttings | Number of new phylloclades | 0.7 x square root of pot top area | Resulting number of cuttings |
| **Small** | 5-6.5 | 19.6-33.2 | 3 | 2 | 5 | 1 | 3.1-4.0 | 4-5 |
| **Medium** | 8.5-9.5 | 56.7-70.9 | 3 | 3 | 6-10 | 2 | 5.3-5.9 | 6 |
| **Large** | 10-11 | 78.5-95.0 | 3 | 3 | 7-11 | 2 | 6.2-6.8 | 7 |
| **X-Large** | 11-12 | 95.0-113.1 | 4 | 4 | 8-12 | 3 | 6.8-7.4 | 7-8 |
| **XX-Large** | 12-15 | 113.1-176.7 | 5 | 5 | 10-14 | 4 | 7.4-9.3 | 8-10 |

In Table 1 above, a comparison between the present invention and a prior art method is provided. Typical slightly conical sales pot sizes are listed: Small, Medium, Large, Extra Large and Extra extra large. For each pot size, the nominal pot diameter is indicated in centimetres, and the top area of the sales pot is indicated in square centimetres. For the prior art method, the number of cuttings 2 planted closely together in the centre of the sales pot is indicated, and the number of new phylloclades 7 extending in direct line 8 on top of each other and placed on top of the respective cutting 2 in the final product is indicated. Please also refer to Fig. 4 illustrating a single branch of a Phyllocactus. For the prior art method, depending on the size of the sales pot, the cuttings 2 may have been planted directly in the sales pot or may intermediately have been planted closely together in one compartment of a multi-compartment tray.

Furthermore, in Table 1, for each of the indicated sales pot sizes, examples according to present invention are indicated. For these examples, the number of cuttings 2 at least substantially evenly distributed over the growing substrate 4 of the sales pot 3 is indicated, and the number of new phylloclades 7 extending in direct line 8 on top of each other and placed on top of the respective cutting 2 in the final product is indicated.

Eventually, to the right in Table 1, for each of the indicated sales pot sizes, the number of cuttings resulting from the general definition according to the present invention is calculated. As mentioned above, according to the present invention, said number of cuttings 2 is greater than 0.7 times the square root of the top area of the sales pot 3 when said top area is measured in square centimetres. Therefore, in a first right column, 0.7 times the square root of the top area of the sales pot 3 has been calculated. In a second right column, the number of cuttings 2 resulting from this definition is indicated.

It is seen that all examples of the invention correspond to the definition of the invention.

Furthermore it is seen that, in practice, according to the present invention, the number of cuttings planted in a sales pot of a certain size is at least approximately doubled, and the number of new phylloclades extending in direct line on top of each other is generally reduced by one as compared to prior art products. Moreover, the cuttings are planted directly in a sales pot. Because the growth time of one new phylloclade is approximately 7 weeks and because a replanting of cuttings extends the growth time by approximately 3 to 5 weeks, according to the method as defined by the present invention, the production time may be reduced by approximately 10 to 12 weeks.

### List of reference numbers

- H: height corresponding to predetermined number of new phylloclades extending in direct line on top of each other and placed on top of respective cutting
- 1: Phyllocacti
- 2: cutting
- 3: sales pot
- 4: growing substrate
- 5: flower bud
- 6: branch
- 7: new phylloclade
- 8: direct line of extension of a predetermined number of new phylloclades

## Claims

1. A method for propagating Phyllocacti (1) including the steps of providing cuttings (2) from a branch of a mother plant, whereby each cutting is formed by a single phylloclade, providing a sales pot (3) with a growing substrate (4), the sales pot having a top area, and planting cuttings in the sales pot, **characterised by** planting said cuttings (2) directly in the sales pot (3) without intermediate replanting so that a number of cuttings (2) are at least substantially evenly distributed over the growing substrate (4) of the sales pot (3), said number of cuttings being greater than 0.7 times the square root of the top area of the sales pot (3) when said top area is measured in square centimetres, and by initiating the forming of flower buds (5) when at least substantially all of the cuttings (2) have formed a respective branch (6) having a height corresponding to a predetermined number of new phylloclades (7) extending in direct line (8) on top of each other and placed on top of the respective cutting (2), said predetermined number of new phylloclades (7) being one when said number of cuttings (2) is less than six, not more than two when said number of cuttings (2) is less than seven, and not more than three when said number of cuttings (2) is less than nine.

2. A method according to claim 1, whereby said number of cuttings (2) is greater than 0.75, preferably 0.8, more preferred 0.9, and even more preferred 1.0, times the square root of the top area of the sales pot (3) when said top area is measured in square centimetres.

3. A method according to claim 1 or 2, whereby said predetermined number of new phylloclades (7) is not more than two when said number of cuttings (2) is less than ten, and not more than three when said number of cuttings (2) is less than 12.

4. A method according to claim 1, whereby the sales pot (3) is a standard conical or cylindrical pot having a nominal top diameter approximately from 5 to 7 centimetres, whereby said number of cuttings (2) is at least five, and whereby said predetermined number of new phylloclades (7) is one.

5. A method according to claim 1, whereby the sales pot (3) is a standard conical or cylindrical pot having a nominal top diameter approximately from 7 to 9 centimetres, whereby said number of cuttings (2) is at least eight, and whereby said predetermined number of new phylloclades (7) is two.

6. A method according to claim 1, whereby the sales pot (3) is a standard conical or cylindrical pot having a nominal top diameter approximately from 9 to 11 centimetres, whereby said number of cuttings (2) is at least nine, and whereby said predetermined number of new phylloclades (7) is not more than two.

7. A method according to claim 1, whereby the sales pot (3) is a standard conical or cylindrical pot having a nominal top diameter approximately from 11 to 13 centimetres, whereby said number of cuttings (2) is at least ten, and whereby said predetermined number of new phylloclades (7) is not more than three.

8. A method according to claim 1, whereby the sales pot (3) is a standard conical or cylindrical pot having a nominal top diameter approximately from 13 to 16 centimetres, whereby said number of cuttings (2) is at least 12, and whereby said predetermined number of new phylloclades (7) is not more than four.

9. A method according to any one of the preceding claims, whereby the Phyllocactus (1) is Schlumbergera and the Phyllocacti planted in the sales pots (3) are subjected to simulated sequential periods of day and night by turning light on and off or at least reducing light substantially, and whereby the forming of flower buds (5) is initiated by reducing the duration of the day periods substantially, such as from approximately between 14 to 15 hours to less than approximately 9 hours.

10. A method according to any one of the claims 1 to 8, whereby the Phyllocactus (1) is Rhipsalidopsis and whereby the forming of flower buds (5) is initiated by reducing substantially the temperature of the Phyllocacti (1) planted in the sales pots (3) from a temperature of approximately 15 to 25 degrees Celsius to a temperature of approximately 8 to 10 degrees Celsius during a period of approximately 7 to 8 weeks.

11. A method according to any one of the preceding claims, whereby cuttings are planted in a number of sales pots (3) with said number of cuttings in dependence of the top area of the sales pot (3) and said predetermined number of new phylloclades (7) in dependence of said number of cuttings, and whereby the top area of some of said sales pots (3) is different from the top area of other of said sales pots (3).

12. A potted plant in the form of Phyllocacti (1) planted in a sales pot (3) with a growing substrate (4), the sales pot (3) having a top area, the Phyllocacti (1) having been propagated by providing cuttings (2) from a branch of a mother plant, each cutting (2) being formed by a single phylloclade, and planting the cuttings (2) in the sales pot (3), **characterised in that** the cuttings (2) have been planted directly in the sales pot (3) without intermediate replanting so that a number of cuttings (2) are at least substantially evenly distributed over the growing substrate (4) of the sales pot (3), said number of cuttings (2) being greater than 0.7 times the square root of the top area of the sales pot (3) when said top area is measured in square centimetres, and **in that** at least substantially all of the cuttings (2) form a respective branch (6) having a height corresponding to a predetermined number of new phylloclades (7) extending in direct line (8) on top of each other and placed on top of the respective cutting (2), said predetermined number of new phylloclades (7) being one when said number of cuttings (2) is less than six, not more than two when said number of cuttings (2) is less than seven, and not more than three when said number of cuttings (2) is less than nine.

13. A potted plant according to claim 12, wherein said number of cuttings (2) is greater than 0.75, preferably 0.8, more preferred 0.9, and even more preferred 1.0, times the square root of the top area of the sales pot (3) when said top area is measured in square centimetres.

14. A potted plant according to claim 12 or 13, wherein said predetermined number of new phylloclades (7) is not more than two when said number of cuttings (2) is less than ten, and not more than three when said number of cuttings (2) is less than 12.

15. A potted plant according to claim 12, wherein the sales pot (3) is a standard conical or cylindrical pot having a nominal top diameter, wherein the nominal top diameter is approximately from 5 to 7 centimetres, said number of cuttings (2) is at least five, and said predetermined number of new phylloclades (7) is one, or wherein the nominal top diameter is approximately from 7 to 9 centimetres, said number of cuttings (2) is at least eight, and said predetermined number of new phylloclades (7) is two, or wherein the nominal top diameter is approximately from 9 to 11 centimetres, said number of cuttings (2) is at least nine, and said predetermined number of new phylloclades (7) is not more than two, or wherein the nominal top diameter is approximately from 11 to 13 centimetres, said number of cuttings (2) is at least ten, and said predetermined number of new phylloclades (7) is not more than three, or wherein the nominal top diameter is approximately from 13 to 16 centimetres, said number of cuttings (2) is at least 12, and said predetermined number of new phylloclades (7) is not more than four.
